# EUROPÄISCHE PATENTANMELDUNG

(11) **EP 1 137 239 A1**
(43) Veröffentlichungstag der Anmeldung: **26.09.2001**
(21) Anmeldenummer: 01201042.7
(22) Anmeldetag: 15.03.2001
(51) Int. Cl.: H04M 1/02

(54) **Umklappbare alfanumerische Tastatur für Mobilfunkgeräte**

(30) Priorität: 23.03.2000 DE 10014166
(71) Anmelder: Uhlemann, Gisela, 45721 Haltern (DE)
(72) Erfinder: Uhlemann, Gisela, 45721 Haltern (DE)
(74) Vertreter: Waxweiler, Jean

(57) **Zusammenfassung**

Die Erfindung betrifft eine alphanumerische Tastatur (1), insbesondere umklappbare alphanumerische Tastatur, die auf der Rückseite eines Mobilfunkgerätes untergebracht ist. Die alphanumerische Tastatur (1) (Folien-, Drucktasten oder und Touchscreendisplayseiten) ist so untergebracht, dass sie sehr eng an das Mobilfunkgerät angepasst ist. Bei Bedarf wird diese Tastatur umgeklappt (3), dabei wird diese Tastatur mittels eines Schaltkontaktes zur frontseitigen Tastatur funktional dazu geschaltet. Jetzt kann die Nachricht sehr schnell eingetippt und versendet werden. Die Touchscreendisplayseiten können für die interaktive Kommunikation (Tastatur) oder auch für die Darstellung von Internetseiten eingesetzt werden.

## Beschreibung

Die Erfindung betrifft eine alphanumerische Tastatur, die mit einem Mobilfunkgerät verbunden ist.

Zur Zeit werden geschriebene Kurznachrichten über SMS (Short Message Service) in ein Möbilfunkgerät über die frontseitige Handytastatur eingegeben. Dabei sind mehrere Buchstaben unter einer Zahl der Handydrucktaste untergebracht. Zum Beispiel die Buchstaben unter den Tasten 1 = GHI und 2 = JKL usw. Mit dieser Methode ist das Schreiben sehr zeitaufwendig. Eine andere Möglichkeit ist eine kleine separate alphanumerische Tastatur, die in die vorhandene Handyleiste zu stecken ist. Bei dieser Methode ist die Eingabe der Buchstaben leicht und schnell möglich, aber der große Nachteil dieser Anwendung ist, dass die separate und starre Tastatur zusammen mit dem Handy unbequem mitzuführen ist.

Die Aufgabe der Erfindung ist es eine alphanumerische Tastatur für Mobilfunkgeräte, welche die aufgezählten Nachteile beim Versenden von SMS und Transport nicht aufweist.

Gemäss der Erfindung wird diese Aufgabe bei einem Mobilfunkgerät durch eine Tastatur mit den kennzeichnenden Merkmalen der unabhängigen Ansprüche gelöst.

Die erfindungsgemäße Lösung hat insbesondere folgende Vorteile:

Die alphanumerische Tastatur (Folien-, Drucktasten oder und Touchscreen-displayseiten) ist so untergebracht, dass sie sehr eng an das Mobilfunkgerät angepasst ist. Bei Bedarf wird diese Tastatur umgeklappt, dabei wird diese Tastatur mittels eines Schaltkontaktes zur frontseitigen Tastatur funktional dazu geschaltet. Jetzt kann die Nachricht sehr schnell eingetippt und versendet werden. Nach Beendigung der Nachrichtenübertragung wird die Tastatur zurück geklappt und funktionslos geschaltet. Jetzt kann das Mobilfunkgerät wie gewohnt zum Telefonieren genutzt werden. Touchscreendisplayseiten können für die interaktive Kommunikation (Tastatur) oder auch für die Darstellung von Internetseiten eingesetzt werden.

Die Erfindung ist in den beigefügten Zeichnungen beispielweise dargestellt. Darin stellen dar:
Fig. 1 ein Handy mit seitlich ausgeklapptem Gehäuseteil (2), in dem die alphanumerische Tastatur (1) bzw. Touchscreendisplayseite enthalten ist. Über Scharniere (3) wird das Gehäuseteil (2) umgeklappt.
Fig. 2 ein Handy mit eingeklapptem Gehäuseteil
Fig. 3 ein Handy mit ausgeklappten Touchscreen-displayseiten auf dem z. B. ein Internetbild auf den Seiten 6,7,8, und eine alphanumerische Tastatur auf der Seite 9 dargestellt ist. Über die Scharniere 10,11,12,13 können die Seiten zusammen- bzw. aufgeklappt werden.
Wie aus den Zeichnungen erkennbar, ist die alphanumerische Tastatur (Folien-, Drucktasten oder und Touchscreen-displayseiten) so untergebracht, dass sie sehr eng an das Mobilfunkgerät angepasst ist. Bei Bedarf wird diese Tastatur umgeklappt, dabei wird diese Tastatur mittels eines Schaltkontaktes zur frontseitigen Tastatur funktional dazu geschaltet. Jetzt kann die Nachricht sehr schnell eingetippt und versendet werden. Die Touchscreendisplayseiten können für die interaktive Kommunikation (Tastatur) oder auch für die Darstellung von Internetseiten eingesetzt werden.

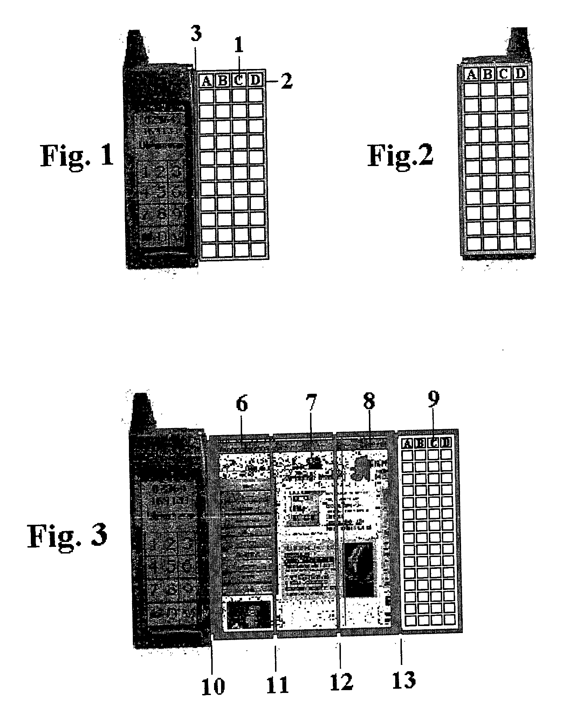

In Fig. 1 ist die Tastatur (Folien- , Drucktasten oder und Touchscreendisplayseiten) 1, insbesondere alphanumerische Tastatur, verbunden mit dem Mobilfunkgerät; dabei ist diese Tastatur 1 separat in einem Gehäuseteil 2 eingebaut und auf einer der Seiten des Handygehäuses, insbesondere der Rückseite des Mobilfunkgerätes (Fig. 2 )gehäusenah platziert. Das Gehäuseteil 2, inkl. Tastatur, ist über Scharniere 3 umklappbar.

Mehrere Touchscreendisplayseiten, z.B. 1 bis 6 Seiten, insbesondere vier Touchscreendisplayseiten 6, 7, 8, 9 (siehe Fig. 3), sind über Scharniere 10, 11, 12, 13 umklappbar.

Die Tastatur, wenn diese ausgeklappt ist, wird über einen Kontakt zu der frontseitigen Tastatur funktional dazu geschaltet. Wird die Tastatur zurückgeklappt, sind diese Tasten über einen Kontakt funktionslos geschaltet.

## Patentansprüche

1. Tastatur (Folien- , Drucktasten oder und Touchscreendisplayseiten), insbesondere alphanumerische Tastatur verbunden mit dem Mobilfunkgerät, **dadurch gekennzeichnet, dass** diese Tastatur Fig. 1 (1) separat in einem Gehäuseteil Fig. 1 (2) eingebaut und auf einer der Seiten des Handygehäuses insbesondere der Rückseite des Mobilfunkgerätes Fig. 2, gehäusenah platziert ist.

2. Tastatur (Folien- , Drucktasten oder und Touchscreendisplayseiten), insbesondere alphanumerische Tastatur, verbunden mit dem Mobilfunkgerät, **dadurch gekennzeichnet, dass** ein Gehäuseteil inkl. Tastatur über Scharniere Fig. 1 (3) umklappbar ist.

3. Tastatur (Folien- , Drucktasten oder und Touchscreendisplayseiten), insbesondere alphanumerische Tastatur, verbunden mit dem Mobilfunkgerät, **dadurch gekennzeichnet, dass** mehrere Touchscreendisplayseiten 1 bis 6 Seiten, insbesondere vier Touchscreendisplayseiten Fig. 3 (6,7,8,9) über Scharniere Fig. 3 (10,11,12,13) umklappbar sind.

4. Tastatur (Folien- , Drucktasten oder und Touchscreendisplayseiten), insbesondere alphanumerische Tastatur, verbunden mit dem Mobilfunkgerät, **dadurch gekennzeichnet, dass** eine Tastatur, wenn diese ausgeklappt ist, über einen Kontakt zu der frontseitigen Tastatur funktional dazu geschaltet wird.

5. Tastatur (Folien- , Drucktasten oder und Touchscreendisplayseiten), insbesondere alphanumerische Tastatur, verbunden mit dem Mobilfunkgerät, **dadurch gekennzeichnet, dass** eine Tastatur, wenn diese zurückgeklappt ist, diese Tasten über einen Kontakt funktionslos geschaltet sind.
